# EUROPÄISCHE PATENTSCHRIFT

(11) **EP 2 383 851 B1**
(45) Veröffentlichungstag und Bekanntmachung des Hinweises auf die Patenterteilung: **30.04.2014**
(21) Anmeldenummer: 11157785.4
(22) Anmeldetag: 11.03.2011
(51) Int. Cl.: H02B 13/035

(54) **Elektrische Schaltanlage, insbesondere Mittelspannungsschaltanlage**
Electric switch assembly, in particular medium voltage switching assembly
Installation de commutation électrique, notamment installation de commutation moyenne tension

(30) Priorität: 27.04.2010 DE 102010018326
(43) Veröffentlichungstag der Anmeldung: 02.11.2011
(73) Patentinhaber: AREVA Energietechnik GmbH, 93055 Regensburg (DE)
(72) Erfinder: Bogie, Wolfgang, 93059, Regensburg (DE); Narin, Güven, 60388, Frankfurt (DE); Zimmerer, Rudolf, 93192, Wald (DE)
(74) Vertreter: DREISS Patentanwälte PartG mbB

(56) Entgegenhaltungen:
- EP-A1- 0 002 440
- EP-A1- 1 739 802
- WO-A1-96/21936
- DE-A1- 4 233 986
- FR-A1- 2 891 955

## Beschreibung

Die Erfindung betrifft eine elektrische Schaltanlage, insbesondere eine Mittelspannungsschaltanlage, mit einem Schaltfeld, das ein Gehäuse aufweist, wobei eine Sammelschiene außerhalb des Gehäuses angeordnet ist, und wobei in dem Gehäuse ein Leistungsschalter vorhanden ist, der mit der Sammelschiene und einem Abgang zu einem elektrischen Verbraucher verbunden ist.

Derartige Schaltfelder sind beispielsweise aus der WO96/21936 A1 bekannt. Üblicherweise sind derartige Schaltfelder dreiphasig ausgebildet. Mit Hilfe der elektrischen Komponenten kann das Schaltfeld beispielsweise dahingehend ausgebildet werden, dass ein Abgang bzw. eine Abzweigung von den Sammelschienen zu einem elektrischen Verbraucher entsteht. In diesem Fall sind dann üblicherweise die Sammelschienen über die Leistungsschalter mit dem Abgang verbunden.

Es kann bei einem derartigen Schaltfeld erforderlich sein, die elektrische Spannung der Sammelschienen zu messen. Hierzu ist es bekannt, entsprechende Spannungswandler beispielsweise im Bereich der Sammelschienen anzubringen. Hierzu muss die gesamte Schaltanlage abgeschaltet werden.

Aufgabe der Erfindung ist es, eine elektrische Schaltanlage zu schaffen, bei der eine Abfrage der elektrischen Spannungen der Sammelschienen auf einfache Weise möglich ist.

Die Erfindung löst diese Aufgabe durch die Merkmale des Anspruchs 1.

Erfindungsgemäß werden also die Spannungswandler nicht im Bereich der Sammelschienen vorgesehen, sondern innerhalb des Gehäuses des Schaltfelds. Daraus ergibt sich der Vorteil, dass in dem Schaltfeld bereits vorhandene Spannungswandler zum Zwecke der Abfrage der elektrischen Spannung der Sammelschienen verwendet werden können. Die Spannungswandler werden in diesem Fall also nicht zur Messung von z.B. der elektrischen Spannung eines angeschlossenen elektrischen Verbrauchers verwendet, sondern sie dienen der Messung der Spannung auf den Sammelschienen. Die Spannungswandler sind in diesem Fall also nicht einem Abgang zugeordnet, sondern den Sammelschienen.

Die in dem Schaltfeld bereits vorhandenen Spannungswandler können also unterschiedlich verwendet werden, ohne dass hierzu wesentliche sonstige Maßnahmen erforderlich sind. Dies erlaubt eine zweifache Nutzung des Schaltfelds im Hinblick auf die Spannungswandler, was mit einem insgesamt geringeren Aufwand und vor allem geringeren Herstellungskosten einhergeht.

Dient das Schaltfeld der Abfrage der elektrischen Spannung der Sammelschienen oder eines angeschlossenen elektrischen Verbrauchers, so kann diese Abfrage dadurch unterbrochen werden, dass der Trenner/Erder-Schalter auf Masse gelegt wird. Damit ist es in beiden Fällen möglich, den jeweiligen Spannungswandler mit Hilfe des zugehörigen Trenner/Erder-Schalters von dem Schaltfeld abzutrennen. Damit kann vermieden werden, dass beispielsweise durch einen Defekt eines Spannungswandlers das gesamte Schaltfeld außer Betrieb genommen werden muss.

Bei einer vorteilhaften Weiterbildung der Erfindung ist zwischen dem anderen Anschluss des Schalters und dem Stromwandler eine Luftstrecke oder ein Isolator vorhanden. Die Luftstrecke bzw. der Isolator gewährleisten, dass zwischen dem Spannungswandler und dem Stromwandler keine elektrische Verbindung entsteht.

Bei einer vorteilhaften Weiterbildung der erfindungsgemäßen Schaltanlage ist die Schiene entfernbar und die Luftstrecke bzw. der Isolator ist durch eine Brücke ersetzbar. Damit ist es mit sehr geringem Aufwand möglich, das erfindungsgemäße Schaltfeld für die beiden erläuterten unterschiedlichen Funktionen herzurichten. Ist die Schiene und die Luftstrecke bzw. der Isolator vorhanden, so dient der Spannungswandler zur Abfrage der Spannung an der zugehörigen Sammelschiene. Ist hingegen die Schiene nicht vorhanden und ist die Luftstrecke bzw. der Isolator durch die Brücke ersetzt, so kann der Spannungswandler zur Abfrage der Spannung eines angeschlossenen elektrischen Verbrauchers verwendet werden.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

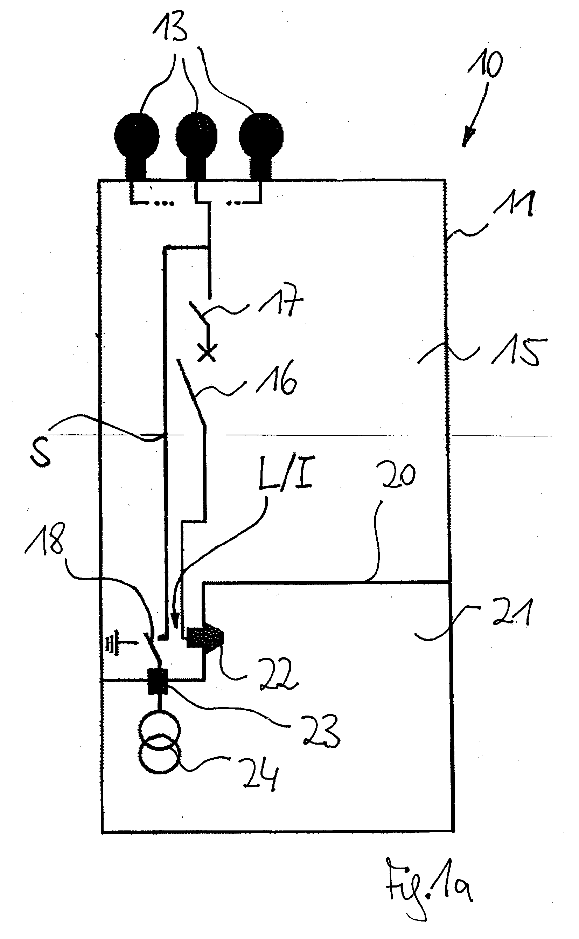

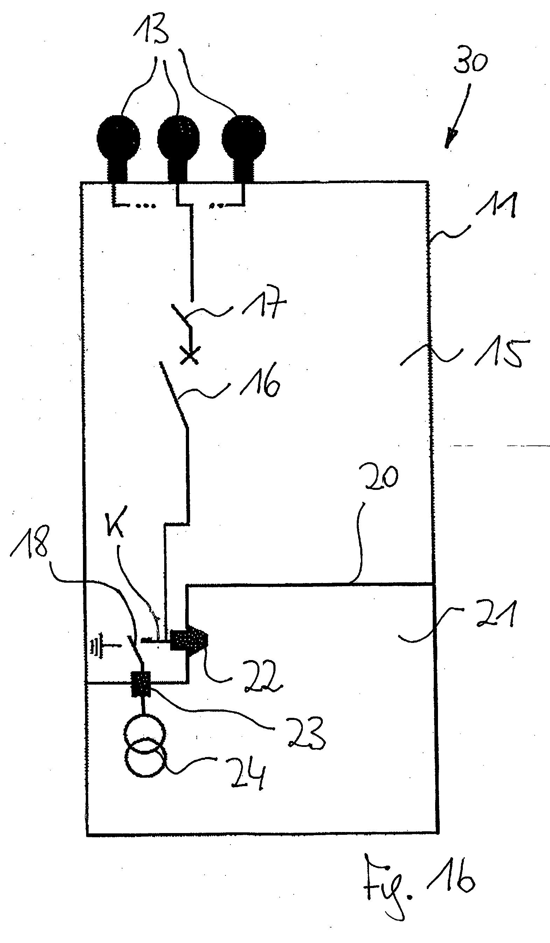

Die Figuren 1a, 1b zeigen schematische Seitenansichten von Ausführungsbeispielen eines erfindungsgemäßen Schaltfelds einer elektrischen Schaltanlage.

Eine elektrische Schaltanlage, insbesondere eine Mittelspannungsschaltanlage, besteht aus einer Mehrzahl von Schaltfeldern. Die Schaltfelder sind über Sammelschienen elektrisch miteinander verbunden. In den einzelnen Schaltfeldern sind unterschiedliche elektrische Komponenten untergebracht, beispielsweise Leistungsschalter, Trenner/Erder-Schalter und dergleichen. Über diese elektrischen Komponenten werden unter anderem Abzweigungen von den Sammelschienen zu elektrischen Verbrauchern realisiert.

In der Figur 1a ist ein erstes einzelnes Schaltfeld 10 in einer Seitenansicht dargestellt. Das Schaltfeld 10 weist ein schrankförmiges metallisches Gehäuse 11 auf, das in nichtdargestellter Weise geerdet ist. In einem oberen Bereich des Schaltfelds 10 sind drei Sammelschienen 13 außerhalb des Gehäuses 11 angeordnet, die senkrecht zur Zeichenebene der Figur 1a verlaufen.

In einem mittleren Gehäuseteil 15 des Schaltfelds 10, das häufig auch als Behälter bezeichnet wird, ist eine Serienschaltung aus einem Leistungsschalter 16 sowie einem Unterbrecher 17 vorhanden. Diese Serienschaltung ist mit einer der Sammelschienen 13 verbunden. Weiterhin ist in dem mittleren Gehäuseteil 15 ein Trenner/Erder-Schalter 18 vorhanden. Ein Anschluss des Trenner/Erder-Schalters 18 ist auf Masse gelegt und der andere Anschluss ist über eine Schiene S mit derselben Sammelschiene 13 verbunden wie die vorgenannte Serienschaltung. Die anderen beiden Sammelschienen 13 sind jeweils in gleicher Weise mit einer entsprechenden Serienschaltung sowie mit einem entsprechenden Trenner/Erder Schalter verbunden.

Handelt es sich um eine gasisolierte Schaltanlage, so ist der mittlere Gehäuseteil 15 mit einem Isoliergas, zum Beispiel mit SF6 befüllt.

Der mittlere Gehäuseteil 15 ist durch eine Trennwand 20 von einem unteren Gehäuseteil 21 getrennt. In der Trennwand 20 ist ein Stromwandler 22 und ein Durchgangsisolator 23 jeweils isoliert gehalten. Der Stromwandler 22 ist mit der Serienschaltung des Leistungsschalters 16 und des Unterbrechers 17 verbunden. Der Stromwandler 22 ist jedoch nicht mit dem Trenner/Erder-Schalter 18 elektrisch verbunden. Statt dessen ist dort eine Luftstrecke L oder gegebenenfalls ein Isolator I vorhanden.

In dem unteren Gehäuseteil 21 - und damit außerhalb des mittleren Gehäuseteils 15 - ist ein Spannungswandler 24 angeordnet, der über den Durchgangsisolator 23 mit dem gemeinsamen Anschluss des Trenner/Erder-Schalters 18 verbunden ist. Es versteht sich, dass die vorgenannten elektrischen Bauteile dreifach vorhanden sind und jeweils einer der Sammelschienen 13 zugeordnet sind.

In dem ersten Schaltfeld 10 der Figur 1a sind die drei Spannungswandler 24 den drei Sammelschienen 13 zugeordnet. Mit Hilfe der einzelnen Spannungswandler 24 ist es damit möglich, die elektrische Spannung der jeweils zugehörigen Sammelschiene 13 abzufragen. Hierzu kann der jeweilige Spannungswandler 24 mit Hilfe des Trenner/Erder-Schalters 18 entweder direkt mit der zugehörigen Sammelschiene 13 verbunden oder auf Masse gelegt werden.

Gleichzeitig kann in dem ersten Schaltfeld 10 der Figur 1a ein Abgang von den Sammelschienen 13 über die Leistungsschalter 16 und die Stromwandler 22 zu einem elektrischen Verbraucher realisiert werden.

In der Figur 1b ist ein zweites einzelnes Schaltfeld 30 der elektrischen Schaltanlage in einer Seitenansicht dargestellt. Das zweite Schaltfeld 30 der Figur 1b stimmt weitgehend mit dem ersten Schaltfeld 10 der Figur 1a überein. In der Figur 1b sind deshalb dieselben Bezugszeichen vorhanden wie in der Figur 1a und es wird im Hinblick auf diese Bezugszeichen auf die zugehörigen Erläuterungen hinsichtlich des Schaltfelds 10 der Figur 1a verwiesen.

Nachfolgend sind nur diejenigen Merkmale des zweiten Schaltfelds 30 der Figur 1b erläutert, die sich von dem ersten Schaltfeld 10 der Figur 1a unterscheiden.

So sind bei dem zweiten Schaltfeld 30 der Figur 1b die Schiene S und die Luftstrecke L bzw. der Isolator I nicht vorhanden. Statt dessen ist bei dem zweiten Schaltfeld 30 der Figur 1b der Stromwandler 22 über eine Brücke K mit dem anderen Anschluß des Trenner/Erder-Schalters 18 verbunden.

Wie bei dem ersten Schaltfeld 10 der Figur 1a, so kann auch bei dem zweiten Schaltfeld 30 der Figur 1b ein Abgang von den Sammelschienen 13 über die Leistungsschalter 16 und die Stromwandler 22 zu einem elektrischen Verbraucher realisiert werden.

Im Unterschied zu dem ersten Schaltfeld 10 der Figur 1a ist es bei dem zweiten Schaltfeld 30 der Figur 1b dabei möglich, mit Hilfe der Spannungswandler 24 die elektrische Spannung des elektrischen Verbrauchers abzufragen. Hierzu kann der jeweilige Spannungswandler 24 mit Hilfe des Trenner/Erder-Schalters 18 entweder über die Brücke K mit der zugehörigen Phase des elektrischen Verbrauchers verbunden werden oder auf Masse gelegt werden.

Der Unterschied zwischen den beiden Schaltfeldern 10, 30 der Figuren 1a, 1b besteht somit darin, dass bei dem Schaltfeld 10 der Figur 1a die Luftstrecke L bzw. der Isolator I zwischen dem anderen Anschluß des Trenner/Erder-Schalters 18 und dem Stromwandler 22 vorhanden ist, und dass bei dem Schaltfeld 30 der Figur 1b diese Luftstrecke L bzw. dieser Isolator I durch die Brücke K ersetzt ist. Ist die Luftstrecke L bzw. der Isolator I vorhanden, so kann bei dem ersten Schaltfeld 10 der Figur 1a über die zusätzliche Schiene S die elektrische Spannung der zugehörigen Sammelschiene 13 abgefragt werden, während bei dem zweiten Schaltfeld 30 der Figur 1b die elektrische Spannung eines angeschlossenen elektrischen Verbrauchers abgefragt werden kann.

Es reicht aus, wenn das erste Schaltfeld 10 der Figur 1a in einer einzigen Ausführung in der gesamten Schaltanlage vorhanden ist. Damit ist es möglich, die alle Schaltfelder der Schaltanlage verbindenden Sammelschienen hinsichtlich ihrer Spannungen abzufragen. Das zweite Schaltfeld 30 der Figur 1b kann hingegen mehrfach in der Schaltanlage vorhanden sein. In diesem zweiten Schaltfeldern 30 können die Spannungen angeschlossener Verbraucher abgefragt werden.

Die beiden Schaltfelder 10, 30 der Figuren 1a, 1b haben weitgehend denselben Aufbau. Damit ist es möglich, durch geringfügige Umbauten, insbesondere durch die erläuterten Änderungen hinsichtlich der Schiene S, der Luftstrecke L bzw. des Isolators I und der Brücke K, zwei unterschiedliche Funktionen für die beiden Schaltfelder 10, 30 zu realisieren. Es ist also möglich, mit Hilfe der Schiene S und der Luftstrecke L bzw. dem Isolator I einerseits sowie ohne die Schiene S und mit der Brücke K andererseits den Spannungswandlern 24 der jeweils entstehenden Schaltfelder 10, 30 unterschiedliche Funktionen zuzuordnen.

Weiterhin ist es möglich, dass die Brücke K als separates Bauteil gar nicht vorhanden ist, sondern dass ein anderes Bauteil, das bei beiden Schaltfeldern 10, 30 der Figuren 1a, 1b vorhanden ist, derart unterschiedlich eingebaut wird, dass es die jeweils erforderlichen Funktionen erfüllt. So kann beispielsweise ein Bestandteil des Trenner/Erder-Schalters 18 derart ausgebildet sein, dass es im Fall der Figur 1a in einer Position eingebaut werden kann, die die Luftstrecke L frei lässt, während dasselbe Bestandteil im Fall der Figur 1b derart in einer Position eingebaut werden kann, dass es die Funktion der Brücke K übernimmt.

## Patentansprüche

1. Elektrische Schaltanlage, insbesondere Mittelspannungsschaltanlage, mit einem Schaltfeld (10), das ein Gehäuse (11) aufweist, wobei eine Sammelschiene (13) außerhalb des Gehäuses (11) angeordnet ist, und wobei in dem Gehäuse (11) ein Leistungsschalter (16) vorhanden ist, der mit der Sammelschiene (13) und einem Abgang zu einem elektrischen verbraucher verbunden ist, wobei in dem Gehäuse (11) ein Trenner/Erder-Schalter (18) vorhanden ist, wobei ein Anschluss des Trenner/Erder-Schalters (18) mit einem im Gehäuse (11) vorhandenen Spannungswandler (24) verbunden ist, **dadurch gekennzeichnet, dass** ein anderer Anschluss des Trenner/Erder-Schalters (18) über eine Schiene (S) direkt mit der Sammelschiene (13) verbunden ist, und wobei der Spannungswandler (24) der Abfrage der elektrischen Spannung der Sammelschiene (13) dient.

2. Schaltanlage nach Anspruch 1, wobei zwischen dem einen Anschluss des Schalters und dem Abgang eine Luftstrecke (L) oder ein Isolator (I) vorhanden ist.

3. Schaltanlage nach Anspruch 2, wobei die Schiene (S) entfernbar und die Luftstrecke (L) bzw. der Isolator (I) durch eine Brücke (K) ersetzbar ist.

4. Schaltanlage nach einem der Ansprüche 1 bis 3, wobei der Abgang zu dem elektrischen Verbraucher über den Leistungsschalter (16) und einen Stromwandler (22) realisierbar ist.

5. Schaltanlage nach einem der vorstehenden Ansprüche, wobei der gemeinsame Anschluss des Trenner/Erder-Schalter (18) mit dem Spannungswandler (24) verbunden ist.

## Claims

1. Electrical switchgear, in particular medium voltage switchgear, having a switchgear panel (10) which has an enclosure (11), a busbar (13) being arranged outside the enclosure (11) and a circuit-breaker (16) which is connected to the busbar (13) and to an output to an electrical load and which is present in the enclosure (11), a disconnector and earthing switch (18) being present in the enclosure (11), one terminal of the disconnector and earthing switch (18) being connected to a voltage transformer (24) which is present in the enclosure (11), **characterised in that** another terminal of the disconnector and earthing switch (18) is connected directly to the busbar (13) via a bus (S), and the voltage transformer (24) being used to check the voltage on the busbar (13).

2. Switchgear according to claim 1, **characterised in that** an air gap (L) or an insulator (I) is present between the one terminal of the switch and the output.

3. Switchgear according to claim 2, **characterised in that** the bus (S) is removable and the air gap (L) or insulator (I) can be replaced by an electrical link (K).

4. Switchgear according to one of claims 1 to 3, wherein the output to the electrical load can be produced by means of the circuit-breaker (16) and a current transformer (22).

5. Switchgear according to one of the preceding claims, **characterised in that** the common terminal of the disconnector and earthing switch (18) is connected to the voltage transformer (24).

## Revendications

1. Installation de distribution électrique, en particulier installation de distribution électrique moyenne tension, comprenant un tableau de distribution (10) qui présente un boîtier (11), une barre collectrice (13) étant agencée à l'extérieur du boîtier (11) et un disjoncteur (16) étant agencé dans le boîtier (11), lequel disjoncteur est raccordé à un consommateur électrique par le biais de la barre collectrice (13) et une sortie, installation dans laquelle il y a dans le boîtier (11) un sectionneur de mise à la terre (18), une borne du sectionneur de mise à la terre (18) étant raccordée à un transformateur de tension (24) présent dans le boîtier (11), **caractérisée en ce qu'**une autre borne du sectionneur de mise à la terre (18) est raccordée directement à la barre collectrice (13) par le biais d'un rail (S), le transformateur de tension (24) servant à interroger la tension électrique de la barre collectrice (13).

2. Installation de distribution électrique selon la revendication 1, dans laquelle il y a entre la première borne du disjoncteur et la sortie un entrefer (L) ou un isolateur (I).

3. Installation de distribution électrique selon la revendication 2, dans laquelle le rail (S) peut être retiré et l'entrefer (L) ou l'isolateur (I) peut être remplacé par un pont (K).

4. Installation de distribution électrique selon l'une des revendications 1 à 3, dans laquelle la sortie vers le consommateur électrique peut être réalisée par le disjoncteur (16) et un transformateur de courant (22).

5. Installation de distribution électrique selon l'une des revendications précédentes, dans laquelle la borne commune du sectionneur de mise à la terre (18) est raccordée au transformateur de tension (24).
